# FASCICULE DE BREVET EUROPEEN

(11) **EP 3 552 155 B1**
(45) Date de publication et mention de la délivrance du brevet: **13.11.2024**
(21) Numéro de dépôt: 17821675.0
(22) Date de dépôt: 01.12.2017
(51) Int. Cl.: G06N 3/08, G06N 3/09, G06N 3/045

(54) **PROCEDE ET DISPOSITIF D'OBTENTION D'UN SYSTEME DE LABELLISATION D'IMAGES**
VERFAHREN UND GERÄT ZUR ERZEUGUNG EINES BILD-KLASSIFIZIERUNGSSYSTEMS
METHOD AND DEVICE FOR OBTAINING A IMAGE-LABELLING-SYSTEM

(30) Priorité: 06.12.2016 FR 1662013
(43) Date de publication de la demande: 16.10.2019
(73) Titulaire: Commissariat à l'Energie Atomique et aux Energies Alternatives, 75015 Paris (FR)
(72) Inventeur: TAMAAZOUSTI, Youssef, 91120 Palaiseau (FR); LE BORGNE, Hervé, 91120 Palaiseau (FR); HUDELOT, Céline, 92340 Bourg la Reine (FR)
(74) Mandataire: Bonnet, Michel
(86) Numéro de dépôt international: PCT/FR2017/053342
(87) Numéro de publication internationale: WO 2018/104626

(56) Documents cités:
- US-A1- 2016 117 587
- YUNCHAO WEI ET AL: "CNN: Single-label to Multi-label", 9 June 2014 (2014-06-09), pages 1 - 14, XP055404290, Retrieved from the Internet <URL:https://arxiv.org/pdf/1406.5726.pdf> [retrieved on 20170906], DOI: 10.1109/TPAMI.2015.2491929
- HICHEM BANNOUR ET AL: "Combinaison d'information visuelle, conceptuelle, et contextuelle pour la construction automatique de hierarchies semantiques adaptees a l'annotation d'images", 26 April 2013 (2013-04-26), pages 1 - 9, XP055404283, Retrieved from the Internet <URL:https://arxiv.org/pdf/1304.5063.pdf> [retrieved on 20170906]
- YOUSSEF TAMAAZOUSTI ET AL: "Diverse Concept-Level Features for Multi-Object Classification", PROCEEDINGS OF THE 2016 ACM ON INTERNATIONAL CONFERENCE ON MULTIMEDIA RETRIEVAL, ICMR '16, 6 June 2016 (2016-06-06), New York, New York, USA, pages 63 - 70, XP055452254, ISBN: 978-1-4503-4359-6, DOI: 10.1145/2911996.2912013
- AMEL ZNAIDIA ET AL: "Multimodal feature generation framework for semantic image classification", PROCEEDINGS OF THE 2ND ACM INTERNATIONAL CONFERENCE ON MULTIMEDIA RETRIEVAL, ICMR '12, 1 January 2012 (2012-01-01), New York, New York, USA, pages 1, XP055090802, ISBN: 978-1-45-031329-2, DOI: 10.1145/2324796.2324842
- PASCAL METTES ET AL: "The ImageNet Shuffle: Reorganized Pre-training for Video Event Detection", ARXIV.ORG, CORNELL UNIVERSITY LIBRARY, 201 OLIN LIBRARY CORNELL UNIVERSITY ITHACA, NY 14853, 23 February 2016 (2016-02-23), XP080685407

## Description

La présente invention concerne un procédé d'obtention d'un système de labellisation d'images, un programme d'ordinateur et un dispositif correspondants et un système de labellisation d'images.

L'invention s'applique plus particulièrement à un procédé d'obtention d'un système de labellisation d'images mis en oeuvre par ordinateur, dans lequel des labels indiquent la présence d'objets dans des images, selon la revendication 1.

Par exemple, le premier article « From generic to spécifie deep representations for visual recognition » de H. Azizpour, A. Razavian, J. Sullivan, A. Maki et S. Carlsson, publié en 2015 dans Computer Vision and Pattern Recognition Workshops, (CVPR-W), décrit un procédé d'apprentissage par transfert (de l'anglais *« transfer-learning »*)*.* Plus précisément, cet article propose d'entraîner le réseau neuronal convolutif AlexNet à partir d'un premier corpus d'apprentissage pour obtenir un premier module de labellisation d'images. Cet article propose en outre d'utiliser la sortie de la première couche neuronale complètement connectée, qui est la sixième couche du réseau, en tant que données descriptives d'une l'image.

En effet, cette couche particulière représente, selon l'article, un bon compromis lorsque la tâche finale n'est pas connue. Les données descriptives sont alors fournies en entrée d'un module aval pour réaliser son apprentissage automatique afin que le système puisse labéliser des images sur la base de labels qui peuvent être différents de ceux du premier corpus d'apprentissage.

Dans un deuxième article *«* Factors of transferability for a generic convnet representation » de H. Azizpour, A. Razavian, J. Sullivan, A. Maki, and S. Carlsson., publié en 2015 dans IEEE Transaction on Pattern Analysis and Machine Intelligence (PAMI), pages 1790-1802, les auteurs étudient l'influence du nombre de labels du premier corpus d'apprentissage sur les performances du système de labellisation d'images. Pour cela, ils enlèvent certaines classes et les images correspondantes (ou bien des images au hasard). Le document US 2016/117587 A1 (YAN ZHICHENG [US] ET AL), 28 avril 2016, divulgue la labellisation d'images par apprentissage automatique.

Il peut ainsi être souhaité de prévoir un procédé d'obtention d'un programme de labellisation d'images qui permette d'améliorer les performances de labellisation du système de labellisation d'images.

Il est donc proposé un procédé d'obtention d'un système de labellisation d'images mis en oeuvre par ordinateur, dans lequel des labels indiquent la présence d'objets dans des images, selon la revendication 1.

Grâce à l'invention, les premières images sont labellisées dans le deuxième corpus d'apprentissage à l'aide de deuxièmes labels plus génériques que les premiers labels, puisque des images qui étaient auparavant associées à des premiers labels différents sont, dans le deuxième corpus d'apprentissage, associées à un même deuxième label. Ainsi, les premières données descriptives fournissent une représentation plus générique de l'image à labelliser que les deuxièmes données descriptives. De manière surprenante, c'est en combinant les premières données descriptives « spécifiques » et les deuxièmes données descriptives « génériques » en entrée du module aval qu'un système de labellisation d'images performant peut être obtenu.

Chacun du premier module de labellisation et du deuxième module de labellisation comporte des couches de traitement successives débutant par une première couche de traitement, le premier module amont comporte une ou plusieurs couches de traitement successives du premier module et le deuxième module amont comporte une ou plusieurs couches de traitement successives du deuxième module.

De manière optionnelle également, la ou les couches de traitement du premier module amont comportent la première couche de traitement du premier module et la ou les couches de traitement du deuxième module amont comportent la première couche de traitement du deuxième module.

Chacun du premier module de labellisation et du deuxième module de labellisation comporte un réseau neuronal convolutif comportant, en tant que couches de traitement successives, des couches convolutives et des couches neuronales qui suivent les couches convolutives.

De manière optionnelle également, le premier module amont comporte les couches convolutives et une partie seulement des couches neuronales du premier module et le deuxième module amont comporte les couches convolutives et une partie seulement des couches neuronales du deuxième module.

De manière optionnelle également, l'obtention du deuxième corpus d'apprentissage comporte, pour chacun d'au moins une partie des premiers labels, la détermination, dans un arbre prédéfini de labels incluant notamment les premiers labels, d'un ancêtre commun à ce premier label et à au moins un autre premier label, l'ancêtre commun déterminé étant le label de remplacement de ce premier label.

Le procédé comporte l'apprentissage automatique sur un ordinateur d'au moins une partie du module aval à partir d'un troisième corpus d'apprentissage comportant des troisièmes images associées à des troisièmes labels, de sorte que, lorsque le premier module amont et le deuxième module amont reçoivent en entrée l'une des troisièmes images, le module aval fournisse une sortie conforme au troisième label associé à cette troisième image dans le troisième corpus d'apprentissage, le premier module amont et le deuxième module amont restant inchangés pendant l'apprentissage.

De manière optionnelle également, le module aval comporte, d'une part, un premier bloc conçu pour recevoir en entrée les premières données descriptives et les deuxièmes données descriptives et pour fournir en sortie des données descriptives globales et, d'autre part, un deuxième bloc conçu pour recevoir en entrée les données descriptives globales et pour fournir en sortie une labellisation, et le procédé comporte en outre :
- l'apprentissage automatique sur un ordinateur du premier bloc à partir d'un quatrième corpus d'apprentissage comportant les premières images associées à des paires de labels, la paire de labels associée à chaque première image comportant le premier label associé à la première image dans le premier corpus d'apprentissage et le deuxième label associé à la première image dans le deuxième corpus d'apprentissage, de sorte que, lorsque le premier module amont et le deuxième module amont reçoivent en entrée l'une des premières images, le premier bloc fournisse une sortie conforme à la paire de labels associée à cette première image dans le quatrième corpus d'apprentissage, le premier module amont et le deuxième module amont restant inchangés pendant l'apprentissage,
- après l'apprentissage automatique du premier bloc, l'apprentissage automatique sur un ordinateur du deuxième bloc à partir du troisième corpus d'apprentissage, de sorte que, lorsque le premier étage amont et le deuxième étage amont reçoivent en entrée l'une des troisièmes images, le module aval fournisse une sortie conforme au troisième label associé à cette troisième image dans le troisième corpus d'apprentissage, le premier module amont, le deuxième module amont et le premier bloc restant inchangés pendant l'apprentissage.

Il est également proposé un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé selon l'invention, lorsque ledit programme est exécuté sur un ordinateur.

Il est également proposé un dispositif d'obtention d'un système de labellisation d'images, conçu pour mettre en oeuvre un procédé selon l'invention.

Il est également proposé un système de labellisation d'images obtenu par un procédé mis en oeuvre par ordinateur selon l'invention.

L'invention sera mieux comprise à l'aide de la description qui va suivre, donnée uniquement à titre d'exemple et faite en se référant aux dessins annexés dans lesquels :
- la figure 1 illustre les étapes successives d'un procédé d'obtention d'un système de labellisation d'images, selon un premier mode de réalisation de l'invention,
- les figures 2 à 6 représentent schématiquement les opérations réalisées lors d'étapes du procédé de la figure 1,
- la figure 7 illustre les étapes successives d'un procédé d'obtention d'un système de labellisation d'images, selon un deuxième mode de réalisation de l'invention,
- les figures 8 et 9 représentent schématiquement les opérations réalisées lors d'étapes du procédé de la figure 7,
- la figure 10 représente schématiquement un dispositif d'obtention d'un système de labellisation d'images.

Dans la description qui va suivre, la labellisation d'une image comporte l'association d'un score de cette image à chacun d'une pluralité de labels prédéterminés.

En outre, dans la description qui va suivre, un module peut être aussi bien un module matériel, c'est-à-dire un module micro programmé ou micro câblé dans des circuits intégrés dédiés sans intervention de programme d'ordinateur, qu'un module logiciel destiné à être exécuté par une unité de traitement d'un ordinateur. Alternativement, un module peut comporter certaines parties matérielles et d'autres logicielles.

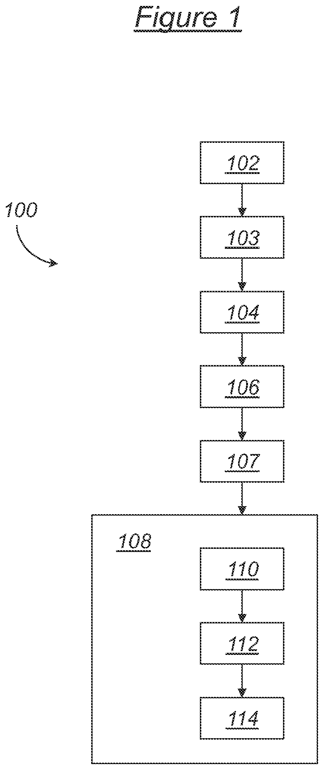

En référence aux figures 1 à 7, un premier procédé 100 de conception d'un système S de labellisation d'images va à présent être décrit.

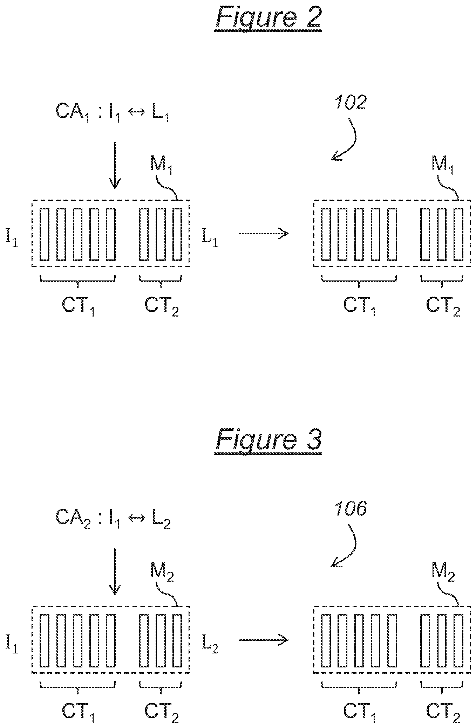

Au cours d'une étape 102 (illustrée sur la figure 2), un premier module de labellisation d'images M₁ est obtenu.

Pour cela, le premier module M₁ est entraîné par apprentissage automatique sur un ordinateur à partir d'un premier corpus d'apprentissage CA₁ comportant des premières images I₁ associées à des premiers labels L₁.

Lors de l'apprentissage, le premier module M₁ est paramétré de manière à ce que, lorsqu'il reçoit en entrée l'une des premières images I₁, il fournisse en sortie une labellisation conforme au premier label L₁ associé à cette première image I₁ dans le premier corpus d'apprentissage CA₁.

Dans l'exemple décrit, le premier module M₁ comporte des couches de traitement successives débutant par une première couche de traitement. La première couche de traitement est destinée à recevoir l'image à labelliser. La sortie de chaque couche de traitement est fournie en entrée de la couche de traitement suivante, sauf pour la dernière couche de traitement qui fournit une labellisation de l'image à labelliser. Chaque couche de traitement comporte des paramètres qui sont ajustés lors de l'apprentissage.

Le premier module M₁ est un réseau neuronal convolutif. Ainsi, les premières couches de traitement sont des couches convolutives CT₁ (cinq dans l'exemple décrit) et les couches suivantes sont des couches neuronales CT₂ complètement connectées (trois dans l'exemple décrit).

Le premier corpus d'apprentissage CA₁ est par exemple la base d'images ILSVRC (ImageNet Large Scale Visual Récognition Challenge) qui est elle-même extraite de la base d'images ImageNet, labellisée conformément à la hiérarchie Word Net.

Les labels utilisés dans les bases d'images les plus courantes, dont par exemple ILSVRC, sont généralement très spécifiques. De ce fait, les images sont très cohérentes visuellement et facilitent probablement l'apprentissage automatique. Cependant, leur utilisation conduit à l'obtention d'un premier module M₁ très spécialisé, ce qui rend difficile sa réutilisation pour une labellisation sur la base d'autres labels.

C'est pourquoi un deuxième module de labellisation d'images M₂ plus générique est obtenu comme cela sera décrit par la suite, lors de la description des étapes 104 et 106.

Au cours d'une étape 103, le premier module M₁ est à nouveau entraîné, mais partiellement cette fois, par apprentissage automatique sur un ordinateur à partir d'un troisième corpus d'apprentissage CA₃ comportant des troisièmes images I₃ associées à des troisièmes labels L₃. L'apprentissage automatique est alors réalisé selon la méthode de « *réglage fin »* (*« fine-tuning »* en anglais) en ajustant seulement une partie des paramètres du premier module M₁. Par exemple, seuls les paramètres d'une ou plusieurs dernières couches neuronales CT₂ sont ajustés. Par exemple, seuls les paramètres de la dernière couche neuronale sont ajustés. Les paramètres des autres couches restent à leurs valeurs issues du premier apprentissage automatique du premier module M₁ à partir du premier corpus d'apprentissage CA₁.

Au cours d'une étape 104, un deuxième corpus d'apprentissage CA₂ est obtenu à partir du premier corpus d'apprentissage CA₁. Le deuxième corpus d'apprentissage CA₂ comporte les premières images I₁ associées à des deuxièmes labels L₂.

L'obtention du deuxième corpus d'apprentissage CA₂ comporte le remplacement, dans le premier corpus d'apprentissage CA₁, de chacun d'au moins une partie des premiers labels L₁ par un label de remplacement, au moins deux premiers labels L₁ étant remplacés par un même label de remplacement. Les deuxièmes labels L₂ comportent les labels de remplacement et les éventuels premiers labels L₁ n'ayant pas été remplacés. Ainsi, toutes les premières images I₁ qui étaient associées, dans le premier corpus d'apprentissage CA₁, à un même premier label L₁ ayant été remplacé sont associées, dans le deuxième corpus d'apprentissage CA₂, au label de remplacement de ce premier label L₁. En outre, comme au moins deux premiers labels L₁ sont remplacés par un même label de remplacement, le nombre de deuxièmes labels L₂ est inférieur au nombre de premiers labels L₁. Ainsi, les labels de remplacement sont des labels ayant un sens plus générique que les premiers labels L₁ qu'ils remplacent. Par exemple, un label de remplacement pour les premiers labels « labrador » et « berger allemand » pourrait être le label « chien » ou bien le label « animal ». Ainsi les deuxièmes labels L₂ sont plus génériques que les premiers labels L₁.

Par exemple, l'obtention du deuxième corpus d'apprentissage CA₂ comporte, pour chacun d'au moins une partie des premiers labels L₁, la détermination, dans un arbre prédéfini de labels incluant notamment les premiers labels L₁, d'un ancêtre commun à ce premier label L₁ et à au moins un autre premier label L₁, l'ancêtre commun déterminé formant le label de remplacement de ce premier label L₁.

Par exemple, le deuxième corpus d'apprentissage CA₂ est obtenu à l'aide de l'algorithme suivant.
*+ un premier ensemble K1 de labels est initialisé pour contenir les premiers labels L₁ et un* deuxième *ensemble K2 est initialisé à l'ensemble vide,*
+ *répéter :*
   - *pour chaque label ci du premier ensemble K1 :*
      - *pour chaque label cj du premier ensemble K1 différent du label ci :*
         • *déterminer le plus proche ancêtre commun (de l'anglais « Lowest Common Ancestor ») dans l'arbre entre le label ci et le label cj,*
         • *proposer à un utilisateur de remplacer ci par le plus proche ancêtre commun. Si l'utilisateur accepte le remplacement, ajouter le plus proche ancêtre commun dans le deuxième ensemble K2, l'associer aux* premières *images associées au label ci et sortir de la boucle sur les cj,*
      - *si le label ci n'a pas été remplacé, ajouter le label ci au deuxième ensemble K2 en gardant ses associations aux premières images,*
   - *réduire le deuxième ensemble K2 à des labels uniques en regroupant si nécessaires les premières images I₁ associées,*
   - *si le* deuxième *ensemble K2 est identique au premier ensemble K1, sortir de la boucle « répéter». Sinon, initialiser le premier ensemble K1 avec les labels du deuxième ensemble K2 et initialiser le deuxième ensemble à l'ensemble vide.*

Par exemple encore, le deuxième corpus d'apprentissage CA₂ est obtenu de manière automatique à partir du premier corpus d'apprentissage CA₁ et de l'arbre, sans intervention d'un utilisateur. Par exemple, dans l'algorithme précédent, l'étape d'acceptation ou non d'un remplacement par l'utilisateur est remplacée par une étape au cours de laquelle le plus proche ancêtre commun est ajouté automatiquement au deuxième ensemble K2 sur la base d'un ou plusieurs critères prédéfinis. Par exemple, le ou les critères prédéfinis comportent le critère selon lequel le plus proche ancêtre commun appartient à une liste prédéterminée de labels de l'arbre et le label ci n'y appartient pas.

Par exemple encore, chacun d'au moins une partie des premiers labels L₁ est remplacé par le plus proche ancêtre commun de ce premier label L₁ et d'au moins un autre premier label L₁, ce plus proche ancêtre commun étant situé au-dessus d'un niveau prédéterminé dans l'arbre, les niveaux de l'arbre étant croissants depuis les labels feuille jusqu'au label racine. Par exemple, pour obtenir ce résultat, le ou les critères prédéfinis pour l'algorithme précédent comportent le critère selon lequel le plus proche ancêtre commun est au-dessus d'un niveau prédéfini dans l'arbre et le label ci est en-dessous de ce niveau prédéfini.

Par exemple encore, pour chaque premier label L₁, un utilisateur se voit proposer tous les ancêtres de ce premier label L₁ dans l'arbre pour sélectionner le label de remplacement de ce premier label L₁.

Ainsi, l'obtention du deuxième corpus d'apprentissage CA₂ demande très peu de travail manuel et peut être automatisé tout ou en partie. En outre, aucune obtention de nouvelles images labellisées n'est nécessaire. Ainsi, le travail fastidieux de labellisation de nouvelles images est évité.

Au cours d'une étape 106 (illustrée sur la figure 3), le deuxième module de labellisation d'images M₂ est obtenu.

Pour cela, le deuxième module M₂ est entraîné par apprentissage automatique sur un ordinateur à partir du deuxième corpus d'apprentissage CA₂.

Lors de l'apprentissage, le deuxième module M₂ est paramétré de manière à ce que, lorsqu'il reçoit en entrée l'une des premières images I₁, il fournisse en sortie une labellisation conforme au deuxième label L₂ associé à cette première image I₁ dans le deuxième corpus d'apprentissage CA₂.

Le deuxième module M₂ est également un réseau neuronal convolutif. Ainsi, les premières couches de traitement CT₁ sont des couches convolutives (cinq dans l'exemple décrit) et les couches suivantes sont des couches neuronales CT₂ complètement connectées (trois dans l'exemple décrit).

De préférence encore, le deuxième module M₂ est obtenu de manière indépendante de l'apprentissage du premier module M₁ réalisé à l'étape 102. Dit autrement, le premier module M₁ obtenu à la suite de l'étape 102 n'est pas utilisé pour obtenir le deuxième module M2.

Au cours d'une étape 107, le deuxième module M₂ est à nouveau entraîné, mais partiellement cette fois, par apprentissage automatique sur un ordinateur à partir du troisième corpus d'apprentissage CA₃. L'apprentissage automatique est alors réalisé selon la méthode de « *réglage fin »* (*« fine-tuning »* en anglais) en ajustant seulement une partie des paramètres du deuxième module M₂. Par exemple, seuls les paramètres d'une ou plusieurs dernières couches neuronales CT₂ sont ajustés. Par exemple, seuls les paramètres de la dernière couche neuronale sont ajustés. Les paramètres des autres couches restent à leurs valeurs issues du premier apprentissage automatique du deuxième module M₂ à partir du deuxième corpus d'apprentissage CA₂.

Au cours d'une étape 108, le système S est obtenu, de manière à ce qu'il comporte trois modules MAm₁, MAm₂ et MAv. Ces trois modules comportent, d'une part, un premier module amont MAm₁ et un deuxième module amont MAm₂ conçus pour recevoir chacun une même image à labelliser I et pour respectivement fournir des premières données descriptives DD₁ et des deuxièmes données descriptives DD₂ de l'image à labelliser I et, d'autre part, un module aval MAv conçu pour recevoir les premières données descriptives DD₁ et les deuxièmes données descriptives DD₂ et pour fournir une labellisation L de l'image à labelliser I.

Le système S est par exemple obtenu sous la forme d'un programme d'ordinateur comportant des instructions implémentant les fonctions des modules décrits ci-dessus, lorsque ledit programme d'ordinateur est exécuté sur un ordinateur. Ce programme d'ordinateur pourrait tout aussi bien être divisé selon toutes les combinaisons possibles en un ou plusieurs sous-programmes. Les fonctions réalisées pourraient aussi être au moins en partie micro programmées ou micro câblées dans des circuits intégrés dédiés. Ainsi, en variante, le système S pourrait être un dispositif électronique composé uniquement de circuits numériques (sans programme d'ordinateur) pour la réalisation des mêmes fonctions.

L'étape 108 d'obtention du système S comporte par exemple les étapes 110 à 114 suivantes.

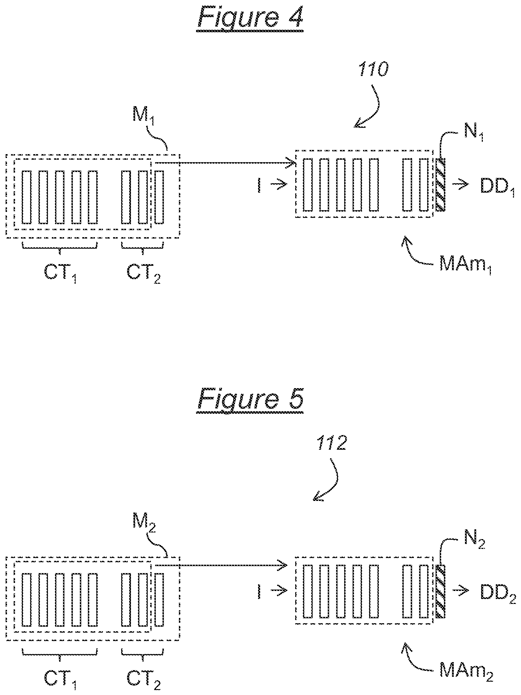

Au cours d'une étape 110 (illustrée sur la figure 4), le premier module amont MAm₁ est obtenu à partir d'au moins une partie du premier module M₁.

Par exemple, le premier module amont MAm₁ comporte une ou plusieurs couches de traitement CT₁, CT₂ successives du premier module M₁, incluant de préférence la première couche de traitement.

Dans l'exemple décrit, le premier module amont MAm₁ comporte les couches convolutives CT₁ et une partie seulement des couches neuronales CT₂, par exemple toutes les couches neuronales CT₂ sauf la dernière.

En outre, dans l'exemple décrit, le premier module amont MAm₁ comporte une couche de normalisation N₁ placée à la suite de la dernière couche importée du premier module M₁. La couche de normalisation N₁ est conçue pour normaliser la sortie de la dernière couche importée du premier module M₁ selon une norme vectorielle prédéfinie, par exemple selon la norme euclidienne. Ainsi, dans l'exemple décrit, la sortie normalisée de la dernière couche importée du premier module M₁ forme les premières données descriptives DD₁.

Au cours d'une étape 112 (illustrée sur la figure 5), le deuxième module amont MAm₂ est obtenu à partir d'au moins une partie du deuxième module M₂.

Par exemple, le deuxième module amont MAm₂ comporte une ou plusieurs couches de traitement CT₁, CT₂ successives du deuxième module M₂, incluant de préférence la première couche de traitement.

Dans l'exemple décrit, le deuxième module amont MAm₂ comporte les couches convolutives CT₁ et une partie seulement des couches neuronales CT₂, par exemple toutes les couches neuronales CT₂ sauf la dernière.

En outre, dans l'exemple décrit, le deuxième module amont MAm₂ comporte une couche de normalisation N₂ placée à la suite de la dernière couche importée du deuxième module M₂. La couche de normalisation N₂ est conçue pour normaliser la sortie de la dernière couche importée du deuxième module M₂ selon une norme vectorielle prédéfinie, par exemple selon la norme euclidienne. Ainsi, dans l'exemple décrit, la sortie normalisée de la dernière couche importée du deuxième module M₂ forme les deuxièmes données descriptives DD₂.

Ainsi, les premières données descriptives DD₁ sont complétées des deuxièmes données descriptives DD₂ qui permettent de décrire l'image à un niveau plus générique que les premières données descriptives DD₁ seules. Cela permet, comme cela sera décrit par la suite, une réutilisation efficace de l'apprentissage automatique réalisé à partir du premier corpus d'apprentissage CA₁ pour labelliser des images selon de nouveaux labels.

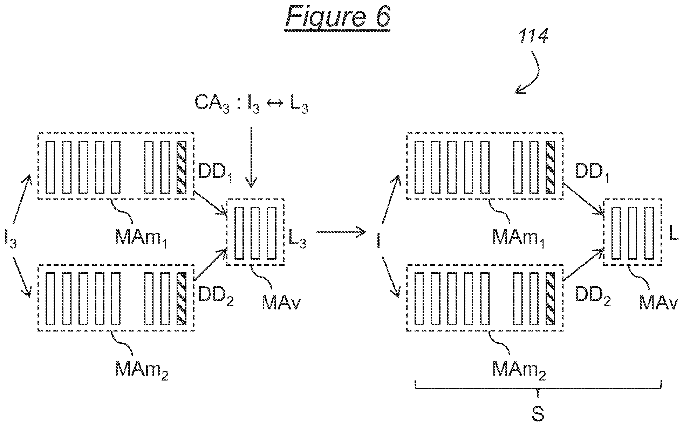

Au cours d'une étape 114 (illustrée sur la figure 6), le module aval MAv est obtenu.

Le module aval MAv est entraîné par apprentissage automatique sur un ordinateur à partir du troisième corpus d'apprentissage CA₃.

Lors de l'apprentissage, le module aval MAv est paramétré de manière à ce que, lorsque le premier module amont MAm₁ et le deuxième module amont MAm₂ reçoivent en entrée l'une des troisièmes images I₃, le module aval MAv fournisse en sortie une labellisation conforme au troisième label L₃ associé à cette troisième image I₃ dans le troisième corpus d'apprentissage CA₃. Lors de l'apprentissage, le premier module amont MAm₁ et le deuxième module amont MAm₂ restent inchangés.

Dans l'exemple décrit, le module aval MAv comporte un réseau neuronal, par exemple comportant trois couches de neurones.

Le nombre de troisièmes images I₃ peut être largement inférieur au nombre de premières images I₁. Par exemple, le nombre de troisièmes images I₃ peut être égal ou inférieur à 10% du nombre de premières images I₁. En outre, les troisièmes images I₃ peuvent représenter des choses complètement différentes des premières images I₁, et les troisièmes labels L₃ peuvent être différents des premiers labels L₁ et des deuxièmes labels L₂. Cependant, grâce à la présence des deuxièmes données descriptives DD₂, il a été trouvé que le système de labellisation d'images S ainsi obtenu donnait de bons résultats pour labelliser des images selon les troisièmes labels L₃, en tout cas des résultats souvent meilleurs qu'en utilisant les premières données descriptives DD₁ seules.

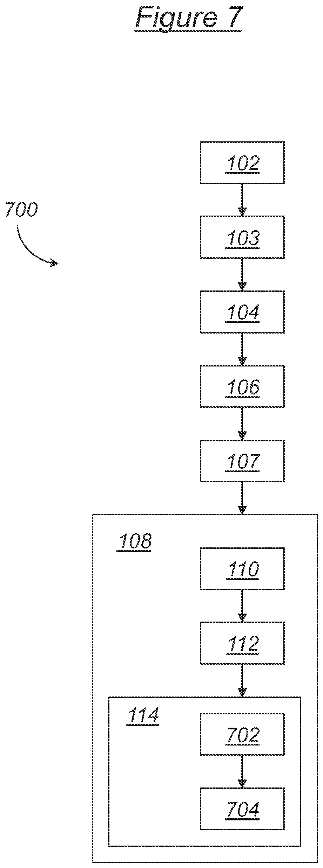

En référence aux figures 7 à 9, un deuxième procédé 700 d'obtention d'un programme de labellisation d'images P va à présent être décrit.

Le procédé 700 est identique au procédé 100 si ce n'est pour les différences qui vont à présent être décrites.

Dans l'exemple décrit, le module aval MAv comporte, d'une part, un premier bloc B₁ conçu pour recevoir en entrée les premières données descriptives DD₁ et les deuxièmes données descriptives DD₂ et pour fournir en sortie des données descriptives globales DDG combinant dans l'exemple décrit les premières données descriptives DD₁ et les deuxièmes données descriptives DD₂ et, d'autre part, un deuxième bloc B₂ conçu pour recevoir en entrée les données descriptives globales DDG et pour fournir en sortie une labellisation à partir de ces données descriptives globales DDG.

En outre, dans l'exemple décrit, l'étape 114 d'obtention du module aval MAv comporte les étapes 702 et 704 suivantes.

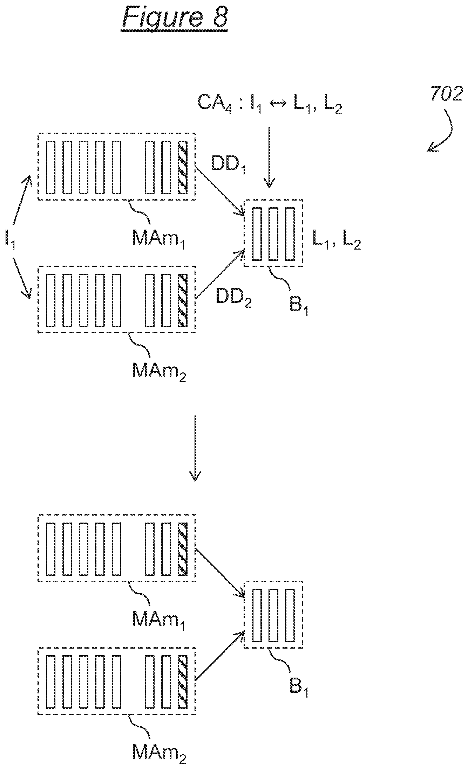

Au cours d'une étape 702 (illustrée sur la figure 8), le premier bloc B₁ est entraîné par apprentissage automatique sur un ordinateur à partir d'un quatrième corpus d'apprentissage CA₄ comportant les premières images I₁ associées à des paires de labels L₁, L₂. La paire de labels L₁, L₂ de chaque première image I₁ comporte le premier label L₁ associé à la première image I₁ dans le premier corpus d'apprentissage CA₁ et le deuxième label L₂ associé à la première image I₁ dans le deuxième corpus d'apprentissage CA₂.

Lors de l'apprentissage, le premier bloc B₁ est paramétré de manière à ce que, lorsque le premier module amont MAm₁ et le deuxième module amont MAm₂ reçoivent en entrée l'une des premières images I₁, le premier bloc B₁ fournisse en sortie une double labellisation (correspondant dans l'exemple décrit aux données descriptives globales DDG) conforme à la paire de labels L₁, L₂ associée à cette première image I₁ dans le quatrième corpus d'apprentissage CA₄. Lors de l'apprentissage, le premier module amont MAm₁ et le deuxième module amont MAm₂ restent inchangés.

Dans l'exemple décrit, le premier bloc B₁ est un réseau neuronal, par exemple comportant trois couches de neurones.

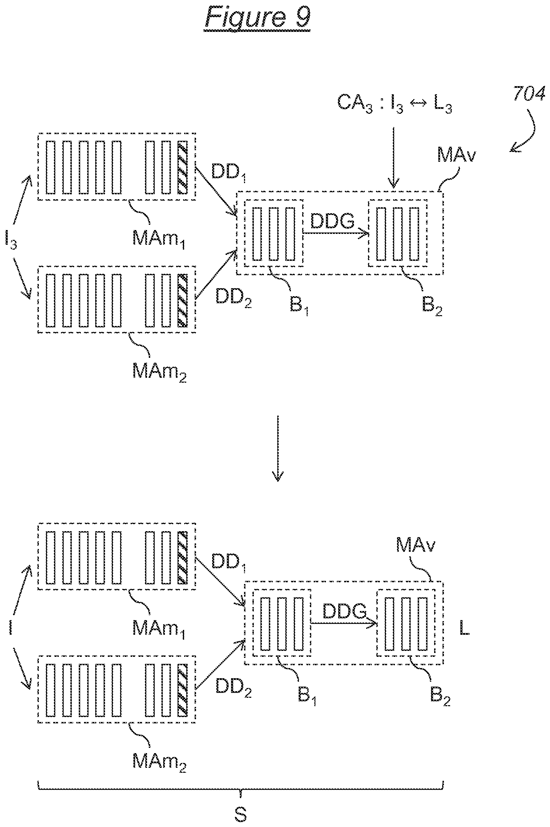

Au cours d'une étape 704 (illustrée sur la figure 9), le deuxième bloc B₂ est entraîné par apprentissage automatique sur un ordinateur à partir du troisième corpus d'apprentissage CA₃.

Lors de l'apprentissage, le deuxième bloc B₂ est paramétré de manière à ce que, lorsque le premier module amont MAm₁ et le deuxième module amont MAm₂ reçoivent en entrée l'une des troisièmes images I₃, le deuxième bloc B₂ fournisse en sortie une labellisation conforme au troisième label L₃ associé à cette troisième image I₃ dans le troisième corpus d'apprentissage CA₃. Lors de l'apprentissage, le premier module amont MAm₁, le deuxième module amont MAm₂ et le premier bloc B₁ restent inchangés.

Dans l'exemple décrit, le deuxième bloc B₂ est un réseau neuronal, par exemple comportant trois couches de neurones.

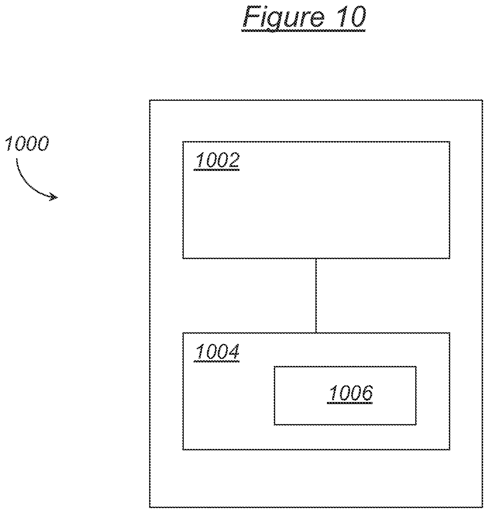

En référence à la figure 10, un dispositif 1000 d'obtention d'un système de labellisation d'images S va à présent être décrit.

Le dispositif 1000 comporte par exemple un ordinateur comportant une unité de traitement 1002 (comportant par exemple un ou plusieurs processeurs) et une mémoire 1004 (comportant par exemple une mémoire RAM) pour le stockage de fichiers de données et de programmes d'ordinateurs. La mémoire 1004 comporte en particulier un programme 1006 comprenant des instructions pour la réalisation d'une partie ou de toutes les étapes d'un procédé d'obtention d'un système de labellisation d'images S tel que décrit précédemment, lorsque ledit programme 1006 est exécuté sur l'ordinateur par l'unité de traitement 1002.

Le programme 1006 pourrait tout aussi bien être divisé selon toutes les combinaisons possibles en un ou plusieurs sous-programmes. Les étapes réalisées pourraient aussi être au moins en partie micro programmées ou micro câblées dans des circuits intégrés dédiés. Ainsi, en variante, l'ordinateur mettant en oeuvre l'unité de traitement 1002 pourrait être remplacé par un dispositif électronique composé uniquement de circuits numériques (sans programme d'ordinateur) pour la réalisation des mêmes étapes.

Il apparaît clairement que les procédés décrits ci-dessus permettent d'obtenir un système de labellisation d'images utilisant au moins une partie d'un premier module de labellisation d'images entraîné à partir de labels « spécifiques », et au moins une partie d'un deuxième module de labellisation d'images entraîné à partir de labels « génériques », ce qui permet d'obtenir une bonne performance de labellisation.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en œuvre de l'enseignement qui vient de lui être divulgué.

## Revendications

1. Procédé (100 ; 700) d'obtention d'un système (S) de labellisation d'images mis en oeuvre par ordinateur, dans lequel des labels indiquent la présence d'objets dans des images, le procédé comportant :
- l'obtention d'un premier module (M₁) de labellisation d'images ayant été entraîné par apprentissage automatique sur un ordinateur à partir d'un premier corpus d'apprentissage (CA₁) comportant des premières images (I₁) associées à des premiers labels (L₁), de sorte que, lorsque le premier module (M₁) de labellisation reçoit en entrée l'une des premières images (I₁), le premier module (M₁) de labellisation fournisse une sortie conforme au premier label (L₁) associé à cette première image (I₁) dans le premier corpus d'apprentissage (CA₁),
- l'obtention (108) du système (S) de labellisation d'images de manière à ce qu'il comporte :
• un premier module amont (MAm₁) conçu pour recevoir une image à labelliser (I) et pour fournir des premières données descriptives (DD₁) de l'image à labelliser (I), le premier module amont (MAm₁) étant obtenu à partir d'au moins une partie du premier module (M₁) de labellisation,
• un module aval (MAv) conçu pour fournir une labellisation (L) de l'image à labelliser (I) à partir des premières données descriptives (DD₁),
- l'obtention (104) d'un deuxième corpus d'apprentissage (CA₂) comportant les premières images (I₁) associées à des deuxièmes labels (L₂) en remplaçant, dans le premier corpus d'apprentissage (CA₁), chacun d'au moins une partie des premiers labels (L₁) par un label de remplacement, au moins deux premiers labels (L₁) étant remplacés par un même label de remplacement, les deuxièmes labels (L₂) comportant les labels de remplacement et les éventuels premiers labels (L₁) n'ayant pas été remplacés,
- l'apprentissage automatique sur un ordinateur d'un deuxième module (M₂) de labellisation d'images à partir du deuxième corpus d'apprentissage (CA₂), de sorte que, lorsque le deuxième module (M₂) de labellisation reçoit en entrée l'une des premières images (I₁), le deuxième module (M₂) de labellisation fournisse une sortie conforme au deuxième label (L₂) associé à cette première image (I₁) dans le deuxième corpus d'apprentissage (CA₂),
le système (S) de labellisation d'images comportant en outre un deuxième module amont (MAm₂) conçu pour recevoir l'image à labelliser (I) et pour fournir des deuxièmes données descriptives (DD₂) de l'image à labelliser(I), le deuxième module amont (MAm₂) étant obtenu à partir d'au moins une partie du deuxième module (M₂) de labellisation,
et le module aval (MAv) étant conçu pour fournir une labellisation (L) de l'image à labelliser (I) à partir des premières données descriptives (DD₁) et des deuxièmes données descriptives (DD₂),
chacun du premier module (M₁) de labellisation et du deuxième module (M₂) de labellisation comportant des couches de traitement (CT₁, CT₂) successives débutant par une première couche de traitement destinée à recevoir les premières images (I₁), et
chacun du premier module (M₁) de labellisation et du deuxième module (M₂) de labellisation comportant un réseau neuronal convolutif comportant, en tant que couches de traitement successives, des couches convolutives (CT₁) et des couches neuronales (CT₂) qui suivent les couches convolutives (CT₁),
le procédé étant **caractérisé en ce qu'**il comporte en outre :
- l'apprentissage automatique sur un ordinateur d'au moins une partie du module aval (MAv) à partir d'un troisième corpus d'apprentissage (CA₃) comportant des troisièmes images (I₃) associées à des troisièmes labels (L₃), de sorte que, lorsque le premier module amont (MAm₁) et le deuxième module amont (MAm₂) reçoivent en entrée l'une des troisièmes images (I₃), le module aval (MAv) fournisse une sortie conforme au troisième label (L₃) associé à cette troisième image (I₃) dans le troisième corpus d'apprentissage (CA₃), le premier module amont (MAm₁) et le deuxième module amont (MAm₂) restant inchangés pendant l'apprentissage automatique de ladite au moins une partie du module aval (MAv).

2. Procédé (100 ; 700) selon la revendication 1, dans lequel le premier module amont (MAm₁) comporte une ou plusieurs couches de traitement (CT₁, CT₂) successives du premier module (M₁) de labellisation et dans lequel le deuxième module amont (MAm₂) comporte une ou plusieurs couches de traitement (CT₁, CT₂) successives du deuxième module (M₂) de labellisation.

3. Procédé (100 ; 700) selon la revendication 2, dans lequel la ou les couches de traitement du premier module amont (MAm₁) comportent la première couche de traitement du premier module (M₁) de labellisation et dans lequel la ou les couches de traitement du deuxième module amont (MAm₂) comportent la première couche de traitement du deuxième module (M₂) de labellisation.

4. Procédé (100) selon l'une quelconque des revendications 1 à 3, dans lequel le premier module amont (MAm₁) comporte les couches convolutives (CT₁) et une partie seulement des couches neuronales (CT₂) du premier module (M₁) de labellisation et dans lequel le deuxième module amont (MAm₂) comporte les couches convolutives (CT₁) et une partie seulement des couches neuronales (CT₂) du deuxième module (M₂) de labellisation.

5. Procédé (100, 700) selon l'une quelconque des revendications 1 à 4, dans lequel l'obtention (104) du deuxième corpus d'apprentissage (CA₂) comporte, pour chacun d'au moins une partie des premiers labels (L₁), la détermination, dans un arbre prédéfini de labels incluant notamment les premiers labels (L₁), d'un ancêtre commun à ce premier label (L₁) et à au moins un autre premier label (L₁), l'ancêtre commun déterminé étant le label de remplacement de ce premier label (L₁).

6. Procédé (700) selon l'une quelconque des revendications 1 à 5, dans lequel le module aval (MAv) comporte, d'une part, un premier bloc (B₁) conçu pour recevoir en entrée les premières données descriptives (DD₁) et les deuxièmes données descriptives (DD₂) et pour fournir en sortie des données descriptives globales (DDG) et, d'autre part, un deuxième bloc (B₂) conçu pour recevoir en entrée les données descriptives globales (DDG) et pour fournir en sortie une labellisation (L) et comportant en outre :
- l'apprentissage automatique sur un ordinateur du premier bloc (B₁) à partir d'un quatrième corpus d'apprentissage (CA₄) comportant les premières images (I₁) associées à des paires de labels (L₁, L₂), la paire de labels (L₁, L₂) associée à chaque première image (I₁) comportant le premier label (L₁) associé à la première image (I₁) dans le premier corpus d'apprentissage (CA₁) et le deuxième label (L₂) associé à la première image (I₁) dans le deuxième corpus d'apprentissage (CA₂), de sorte que, lorsque le premier module amont (MAm₁) et le deuxième module amont (MAm₂) reçoivent en entrée l'une des premières images (I₁), le premier bloc (B₁) fournisse une sortie conforme à la paire de labels (L₁, L₂) associée à cette première image (I₁) dans le quatrième corpus d'apprentissage (CA₄), le premier module amont (MAm₁) et le deuxième module amont (MAm₂) restant inchangés pendant l'apprentissage,
- après l'apprentissage automatique du premier bloc (B₁), l'apprentissage automatique sur un ordinateur du deuxième bloc (B₂) à partir du troisième corpus d'apprentissage (CA₃), de sorte que, lorsque le premier étage amont (MAm₁) et le deuxième étage amont (MAm₂) reçoivent en entrée l'une des troisièmes images (I₃), le module aval (MAv) fournisse une sortie conforme au troisième label (L₃) associé à cette troisième image (I₃) dans le troisième corpus d'apprentissage (CA₃), le premier module amont (MAm₁), le deuxième module amont (MAm₂) et le premier bloc (B₁) restant inchangés pendant l'apprentissage.

7. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé selon l'une quelconque des revendications 1 à 6, lorsque ledit programme est exécuté sur un ordinateur.

8. Dispositif (1000) d'obtention d'un système (S) de labellisation d'images, conçu pour mettre en oeuvre un procédé selon l'une quelconque des revendications 1 à 6.

9. Système (S) de labellisation d'images obtenu par un procédé mis en oeuvre par ordinateur selon l'une quelconque des revendications 1 à 6.

## Patentansprüche

1. Verfahren (100; 700) zum Erhalten eines Systems (S) zum Kennzeichnen von Bildern, das durch einen Computer durchgeführt wird, wobei die Kennzeichnungen das Vorhandensein von Objekten in Bildern an, wobei das Verfahren Folgendes umfasst:
- Erhalten eines ersten Moduls (M₁) zum Kennzeichnen von Bildern, das durch maschinelles Lernen auf einem Computer anhand eines ersten Lernregelwerks (CA₁), das erste Bilder (I₁) umfasst, die ersten Kennzeichnungen (L₁) zugeordnet sind, derart trainiert wurde, dass, wenn das erste Kennzeichnungsmodul (M₁) eines der ersten Bilder (I₁) als Eingabe empfängt, das erste Kennzeichnungsmodul (M₁) eine Ausgabe bereitstellt, die mit der ersten Kennzeichnung (L₁) übereinstimmt, die dem ersten Bild (I₁) im ersten Lernregelwerk (CA₁) zugeordnet ist,
- Erhalten (108) des Systems (S) zum Kennzeichnen von Bildern in einer Weise, dass es Folgendes umfasst:
• ein erstes vorgelagertes Modul (MAm₁), das dazu ausgelegt ist, ein zu kennzeichnendes Bild (I) zu empfangen und erste beschreibende Daten (DD₁) des zu kennzeichnenden Bildes (I) bereitzustellen, wobei das erste vorgelagerte Modul (MAm₁) anhand mindestens eines Teils des ersten Kennzeichnungsmoduls (M₁) erhalten wird,
• ein nachgelagertes Modul (MAv), das dazu ausgelegt ist, eine Kennzeichnung (L) des zu kennzeichnenden Bildes (I) anhand der ersten beschreibenden Daten (DD₁) bereitzustellen,
- Erhalten (104) eines zweiten Lernregelwerks (CA₂), das die ersten Bilder (I₁) umfasst, die zweiten Kennzeichnungen (L₂) zugeordnet sind, indem in dem ersten Lernregelwerk (CA₁) jedes von mindestens einem Teil der ersten Kennzeichnungen (L₁) durch eine Ersatzkennzeichnung ersetzt wird, wobei mindestens zwei erste Kennzeichnungen (L₁) durch dieselbe Ersatzkennzeichnung ersetzt werden, wobei die zweiten Kennzeichnungen (L₂) die Ersatzkennzeichnungen und die möglichen ersten Kennzeichnungen (L₁), die nicht ersetzt wurden, umfassen,
- maschinelles Lernen eines zweiten Moduls (M₂) zum Kennzeichnen von Bildern anhand des zweiten Lernregelwerks (CA₂) derart auf einem Computer, dass, wenn das zweite Kennzeichnungsmodul (M₂) eines der ersten Bilder (I₁) als Eingabe empfängt, das zweite Kennzeichnungsmodul (M₂) eine Ausgabe bereitstellt, die mit der zweiten Kennzeichnung (L₂) übereinstimmt, die dem ersten Bild (I₁) im zweiten Lernregelwerk (CA₂) zugeordnet ist,
wobei das System (S) zum Kennzeichnen von Bildern ferner ein zweites vorgelagertes Modul (MAm₂) umfasst, das dazu ausgelegt ist, das zu kennzeichnende Bild (I) zu empfangen und zweite beschreibende Daten (DD₂) des zu kennzeichnenden Bildes (I) bereitzustellen, wobei das zweite vorgelagerte Modul (MAm₂) anhand mindestens eines Teils des zweiten Kennzeichnungsmoduls (M₂) erhalten wird,
und das nachgelagerte Modul (MAv) dazu ausgelegt ist, eine Kennzeichnung (L) des zu kennzeichnenden Bildes (I) anhand der ersten beschreibenden Daten (DD₁) und der zweiten beschreibenden Daten (DD₂) bereitzustellen,
wobei das erste Kennzeichnungsmodul (M₁) und das zweite Kennzeichnungsmodul (M₂) jeweils aufeinanderfolgende Verarbeitungsschichten (CT₁, CT₂) umfassen, beginnend mit einer ersten Verarbeitungsschicht, die dazu bestimmt ist, die ersten Bilder (I₁) zu empfangen, und
wobei das erste Kennzeichnungsmodul (M₁) und das zweite Kennzeichnungsmodul (M₂) jeweils ein gefaltetes neuronales Netzwerk umfassen, das als aufeinanderfolgende Verarbeitungsschichten Faltungsschichten (CT₁) und neuronale Schichten (CT₂), die auf die Faltungsschichten (CT₁) folgen, umfasst,
wobei das Verfahren **dadurch gekennzeichnet ist, dass** es ferner Folgendes umfasst:
- maschinelles Lernen mindestens eines Teils des nachgelagerten Moduls (MAv) anhand eines dritten Lernregelwerks (CA₃), das dritte Bilder (I₃) umfasst, die dritten Kennzeichnungen (L₃) zugeordnet sind, derart auf einem Computer, dass, wenn das erste vorgelagerte Modul (MAm₁) und das zweite vorgelagerte Modul (MAm₂) eines der dritten Bilder (I₃) als Eingabe empfangen, das nachgelagerte Modul (MAv) eine Ausgabe bereitstellt, die mit der dritten Kennzeichnung (L₃) übereinstimmt, die dem dritten Bild (I₃) im dritten Lernregelwerk (CA₃) zugeordnet ist, wobei das erste vorgelagerte Modul (MAm₁) und das zweite vorgelagerte Modul (MAm₂) während des maschinellen Lernens des mindestens einen Teils des nachgelagerten Moduls (MAv) unverändert bleiben.

2. Verfahren (100; 700) nach Anspruch 1, wobei das erste vorgelagerte Modul (MAm₁) eine oder mehrere aufeinanderfolgende Verarbeitungsschichten (CT₁, CT₂) des ersten Kennzeichnungsmoduls (M₁) umfasst und wobei das zweite vorgelagerte Modul (MAm₂) eine oder mehrere aufeinanderfolgende Verarbeitungsschichten (CT₁, CT₂) des zweiten Kennzeichnungsmoduls (M₂) umfasst.

3. Verfahren (100; 700) nach Anspruch 2, wobei die Verarbeitungsschicht oder die Verarbeitungsschichten des ersten vorgelagerten Moduls (MAm₁) die erste Verarbeitungsschicht des ersten Kennzeichnungsmoduls (M₁) umfassen und wobei die Verarbeitungsschicht oder die Verarbeitungsschichten des zweiten vorgelagerten Moduls (MAm₂) die erste Verarbeitungsschicht des zweiten Kennzeichnungsmoduls (M₂) umfassen.

4. Verfahren (100) nach einem der Ansprüche 1 bis 3, wobei das erste vorgelagerte Modul (MAm₁) die Faltungsschichten (CT₁) und nur einen Teil der neuronalen Schichten (CT₂) des ersten Kennzeichnungsmoduls (M₁) umfasst und wobei das zweite vorgelagerte Modul (MAm₂) die Faltungsschichten (CT₁) und nur einen Teil der neuronalen Schichten (CT₂) des zweiten Kennzeichnungsmoduls (M₂) umfasst.

5. Verfahren (100, 700) nach einem der Ansprüche 1 bis 4, wobei das Erhalten (104) des zweiten Lernregelwerks (CA₂) für jeweils mindestens einen Teil der ersten Kennzeichnungen (L₁) das Bestimmen eines gemeinsamen Vorläufers der ersten Kennzeichnung (L₁) und mindestens einer anderen ersten Kennzeichnung (L₁) in einem vordefinierten Baum von Kennzeichnungen, der insbesondere die ersten Kennzeichnungen (L₁) einschließt, umfasst, wobei der bestimmte gemeinsame Vorläufer die Ersatzkennzeichnung der ersten Kennzeichnung (L₁) ist.

6. Verfahren (700) nach einem der Ansprüche 1 bis 5, wobei das vorgelagerte Modul (MAv) einerseits einen ersten Block (B₁), der dazu ausgelegt ist, die ersten beschreibenden Daten (DD₁) und die zweiten beschreibenden Daten (DD₂) als Eingabe zu empfangen und die beschreibende Daten (DDG) als Ausgabe bereitzustellen, und andererseits einen zweiten Block (B₂) umfasst, der dazu ausgelegt ist, die globalen beschreibenden Daten (DDG) als Eingabe zu empfangen und eine Kennzeichnung (L) als Ausgabe bereitzustellen, und ferner Folgendes umfasst:
- maschinelles Lernen des ersten Blocks (B₁) anhand eines vierten Lernregelwerks (CA₄), der die ersten Bilder (I₁) umfasst, die Paaren von Kennzeichnungen (L₁, L₂) zugeordnet sind, auf einem Computer, wobei das Paar von Kennzeichnungen (L₁, L₂), die jedem ersten Bild (I₁) zugeordnet sind, die erste Kennzeichnung (L₁), das dem ersten Bild (I₁) im ersten Lernregelwerk (CA₂) zugeordnet ist, und die zweite Kennzeichnung (L₂) umfasst, die dem ersten Bild (I₁) im zweiten Lernregelwerk (CA₂) zugeordnet ist, derart, dass, wenn das erste vorgelagerte Modul (MAm₁) und das zweite vorgelagerte Modul (MAm₂) eines der ersten Bilder (I₁) als Eingabe empfangen, der erste Block (B₁) eine Ausgabe bereitstellt, die mit dem Paar von Kennzeichnungen (L₁, L₂) übereinstimmt, das dem ersten Bild (I₁) im vierten Lernregelwerk (CA₄) zugeordnet ist, wobei das erste vorgelagerte Modul (MAm₁) und das zweite vorgelagerte Modul (MAm₂) während des Lernens unverändert bleiben,
- nach dem maschinellen Lernen des ersten Blocks (B₁), maschinelles Lernen des zweiten Blocks (B₂) anhand des dritten Lernregelwerks (CA₃) derart auf einem Computer, dass, wenn die erste vorgelagerte Stufe (MAm₁) und die zweite vorgelagerte Stufe (MAm₂) eines der dritten Bilder (I₃) als Eingabe empfangen, das nachgelagerte Modul (MAv) eine Ausgabe bereitstellt, die mit der dritten Kennzeichnung (L₃) übereinstimmt, die dem dritten Bild (I₃) im dritten Lernregelwerk (CA₃) zugeordnet ist, wobei das erste vorgelagerte Modul (MAm₁), das zweite vorgelagerte Modul (MAm₂) und der erste Block (B₁) während des Lernens unverändert bleiben.

7. Computerprogramm, das aus einem Kommunikationsnetzwerk heruntergeladen werden kann und/oder auf einem computerlesbaren Medium gespeichert ist und/oder von einem Prozessor ausgeführt werden kann, **dadurch gekennzeichnet, dass** es Anweisungen zur Ausführung der Schritte eines Verfahrens nach einem der Ansprüche 1 bis 6 umfasst, wenn das Programm auf einem Computer ausgeführt wird.

8. Vorrichtung (1000) zum Erhalten eines Systems (S) zum Kennzeichnen von Bildern, das dazu ausgelegt ist, ein Verfahren nach einem der Ansprüche 1 bis 6 durchzuführen.

9. System (S) zum Kennzeichnen von Bildern, das mit einem durch einen Computer durchgeführten Verfahren nach einem der Ansprüche 1 bis 6 erhalten wurde.

## Claims

1. A method (100; 700) for obtaining a system (S) for labelling images implemented by computer, wherein labels indicate the presence of objects in images, the method comprising:
- obtaining a first module (M₁) for labelling images that has been trained by machine learning on a computer on the basis of a first training corpus (CA₁) comprising first images (I₁) associated with first labels (L₁), in such a way that, when the first labelling module (M₁) receives, as an input, one of the first images (I₁), the first labelling module (M₁) provides an output consistent with the first label (L₁) associated with this first image (I₁) in the first training corpus (CA₁),
- obtaining (108) the system (S) for labelling images in such a way that it comprises:
• a first upstream module (MAm₁) designed to receive an image to be labelled (I) and to provide first descriptive data (DD,) of the image to be labelled (I), the first upstream module (MAm₁) being obtained from at least a portion of the first labelling module (M₁),
• a downstream module (MAv) designed to provide a labelling (L) of the image to be labelled (I) on the basis of the first descriptive data (DD₁),
- obtaining (104) a second training corpus (CA₂) comprising the first images (I₁) associated with second labels (L₂) by replacing, in the first training corpus (CA₁), each of at least a portion of the first labels (L₁) by a replacement label, at least two first labels (L₁) being replaced by the same replacement label, the second labels (L₂) comprising the replacement labels and the possible first labels (L₁) that have not been replaced,
- the machine learning, on a computer, of a second module (M₂) for labelling images on the basis of the second training corpus (CA₂), in such a way that, when the second labelling module (M₂) receives, as an input, one of the first images (I₁), the second labelling module (M₂) provides an output consistent with the second label (L₂) associated with this first image (I₁) in the second training corpus (CA₂),
the system (S) for labelling images further comprising a second upstream module (MAm₂) designed to receive the image to be labelled (I) and to provide second descriptive data (DD₂) of the image to be labelled (I), the second upstream module (MAm₂) being obtained on the basis of at least a portion of the second labelling module (M₂),
and the downstream module (MAv) being designed to provide a labelling (L) of the image to be labelled (I) on the basis of the first descriptive data (DD,) and the second descriptive data (DD₂),
each of the first labelling module (M₁) and the second labelling module (M₂) comprising successive processing layers (CT₁, CT₂) beginning with a first processing layer designed to receive the first images (I₁),
and
each of the first labelling module (M₁) and the second labelling module (M₂) comprising a convolutional neural network including, as successive processing layers, convolutional layers (CT,) and neural layers (CT₂) following the convolutional layers (CT₁),
the method being **characterised in that** it further comprises:
- the machine learning, on a computer, of at least a portion of the downstream module (MAv) on the basis of a third training corpus (CA₃) comprising third images (I₃) associated with third labels (L₃), in such a way that, when the first upstream module (MAm₁) and the second upstream module (MAm₂) receive, as an input, one of the third images (I₃), the downstream module (MAv) provides an output consistent with the third label (L₃) associated with this third image (I₃) in the third training corpus (CA₃), the first upstream module (MAm₁) and the second upstream module (MAm₂) remaining unchanged during the automatic learning of said at least part of the downstream module (MAv).

2. The method (100; 700) according to claim 1, wherein the first upstream module (MAm₁) comprises one or more successive processing layers (CT₁, CT₂) of the first labelling module (M₁) and wherein the second upstream module (MAm₂) comprises one or more successive processing layers (CT₁, CT₂) of the second labelling module (M₂).

3. The method (100; 700) according to claim 2, wherein the processing layer(s) of the first upstream module (MAm₁) comprise the first processing layer of the first labelling module (M₁) and wherein the processing layer(s) of the second upstream module (MAm₂) comprise the first processing layer of the second labelling module (M₂).

4. The method (100) according to anyone of claims 1 to 3, wherein the first upstream module (MAm₁) comprises the convolutional layers (CT,) and only a portion of the neural layers (CT₂) of the first labelling module (M₁) and wherein the second upstream module (MAm₂) comprises the convolutional layers (CT,) and only a portion of the neural layers (CT₂) of the second labelling module (M₂).

5. The method (100, 700) according to any one of claims 1 to 4, wherein obtaining (104) the second training corpus (CA₂) comprises, for each of at least a portion of the first labels (L₁), the determination, in a predefined tree of labels including in particular the first labels (L₁), of an ancestor common to this first label (L₁) and to at least another first label (L₁), the common ancestor determined being the replacement label of this first label (L₁).

6. The method (700) according to any one of claims 1 to 5, wherein the downstream module (MAv) comprises, on the one hand, a first block (B₁) designed to receive, as an input, the first descriptive data (DD,) and the second descriptive data (DD₂) and to provide, as an output, global descriptive data (DDG) and, on the other hand, a second block (B₂) designed to receive, as an input, the global descriptive data (DDG) and to provide, as an output, a labelling (L) and further comprising:
- the machine learning, on a computer, of the first block (B₁) on the basis of a fourth training corpus (CA₄) comprising the first images (I₁) associated with pairs of labels (L₁, L₂), the pair of labels (L₁, L₂) associated with each first image (I₁) comprising the first label (L₁) associated with the first image (I₁) in the first training corpus (CA₁) and the second label (L₂) associated with the first image (I₁) in the second training corpus (CA₂), in such a way that, when the first upstream module (MAm₁) and the second upstream module (MAm₂) receive, as an input, one of the first images (I₁), the first block (B₁) provides an output consistent with the pair of labels (L₁, L₂) associated with this first image (I₁) in the fourth training corpus (CA₄), the first upstream module (MAm₁) and the second upstream module (MAm₂) remaining unchanged during the learning,
- after the machine learning of the first block (B₁), the machine learning, on a computer, of the second block (B₂) on the basis of the third training corpus (CA₃), in such a way that, when the first upstream stage (MAm₁) and the second upstream stage (MAm₂) receive, as an input, one of the third images (I₃), the downstream module (MAv) provides an output consistent with the third label (L₃) associated with this third image (I₃) in the third training corpus (CA₃), the first upstream module (MAm₁), the second upstream module (MAm₂) and the first block (B₁) remaining unchanged during the learning.

7. A computer program that can be downloaded from a communication network and/or is recorded on a medium readable by computer and/or can be executed by a processor, **characterised in that** it comprises instructions for the execution of the steps of a method according to any one of claims 1 to 6, when said program is executed on a computer.

8. A device (1000) for obtaining a system (S) for labelling images, designed to implement a method according to any one of claims 1 to 6.

9. A system (S) for labelling images obtained by a computer-implemented method according to any one of claims 1 to 6.
